# EUROPÄISCHE PATENTSCHRIFT

(11) **EP 2 739 417 B1**
(45) Veröffentlichungstag und Bekanntmachung des Hinweises auf die Patenterteilung: **07.10.2015**
(21) Anmeldenummer: 11743028.0
(22) Anmeldetag: 02.08.2011
(51) Int. Cl.: B22F 1/00, C04B 35/634, C08L 29/00, B22F 3/22

(54) **BINDEMITTELMISCHUNG FÜR DIE HERSTELLUNG VON FORMTEILEN MITTELS SPRITZVERFAHREN**
BINDER MIXTURE FOR PRODUCING MOULDED PARTS USING INJECTION METHODS
MÉLANGE DE LIANTS POUR LA PRODUCTION DE PIÈCES MOULÉES PAR INJECTION

(43) Veröffentlichungstag der Anmeldung: 11.06.2014
(73) Patentinhaber: GKN Sinter Metals Holding GmbH, 42477 Radevormwald (DE)
(72) Erfinder: KRUZHANOV, Vladislav, 42897 Remscheid (DE); DE CRISTOFARO, Nicola, 42859 Remscheid (DE)
(74) Vertreter: Von Kreisler Selting Werner - Partnerschaft von Patentanwälten und Rechtsanwälten mbB
(86) Internationale Anmeldenummer: PCT/EP2011/003865
(87) Internationale Veröffentlichungsnummer: WO 2013/017140

(56) Entgegenhaltungen:
- EP-A2- 0 820 737
- EP-A2- 1 029 895
- WO-A1-2007/004836
- DE-A1- 19 935 276
- JP-A- 4 365 803
- US-A- 5 744 532
- US-A1- 2004 138 049

## Beschreibung

Die vorliegende Erfindung betrifft eine Bindemittelmischung für die Herstellung von Formteilen mittels Spritzverfahren, als auch eine spritzfähige Mischung (auch Feedstock genannt), umfassend bevorzugt neben mindestens einer erfindungsgemäßen Bindemittelmischung mindestens ein pulverförmiges Material, ausgewählt aus einer Gruppe umfassend metallische und/oder keramische Materialien, sowie ein Verfahren zur Herstellung von Formteilen mittels Spritzgießen.

Ein bekanntes Spritzverfahren ist das Pulverspritzgießen (powder injection moulding (PIM)), welches letztendlich eine Kombination des bekannten Spritzgießens von Kunststoffen zur Herstellung von Formteilen und der Sintertechnologie zur Herstellung gepresster Festkörper ist. Beim PIM-Verfahren wird ein metallisches und/oder keramisches Pulver mit einem Bindemittel vermischt, und diese Mischung anschließend in üblichen Spritzvorrichtungen, welche auch zur Herstellung von Kunststoffformteilen benutzt werden, verarbeitet.

Das hierdurch erhaltene Formteil wird als Grünling bezeichnet, der nachfolgend entbindert und gesintert wird, wobei auch weitergehende Bearbeitungsschritte nach dem Sintern wie Wärmeglühung, Beschichtung, etc. möglich sind. Der große Vorteil des PIM-Verfahrens ist die Zurverfügungstellung endkonturnaher gesinterter Formteile, so dass sich nachfolgende Bearbeitungsschritte vereinfachen lassen, oder aber diese sogar u. U. entfallen können. An das Bindemittel werden spezifische Anforderungen dahingehend gestellt, als dass dieses nicht nur für eine ausreichende Festigkeit des Grünlings, sondern auch für eine ausreichende Fließfähigkeit und damit Verarbeitbarkeit in der Mischung sorgen soll. Ein Nachteil der bekannten Bindemittel ist dabei oftmals, dass diese letztendlich der im PIM-Verfahren zu verarbeitenden Mischung mit einem metallischen und/oder keramischen Pulver nur eine gewisse Fließfähigkeit verleihen, so dass eine Begrenzung sowohl in der Geometrie, insbesondere bei Hinterschneidungen, als auch bei dem Gewicht und Größe bzw. Länge der mittels dieses Verfahrens herzustellenden Bauteile erfolgt. Aufgabe der vorliegenden Erfindung ist es daher, eine Bindemittelmischung zur Verfügung zu stellen, welche zu einer Erweiterung des Einsatzbereiches insbesondere des PIM-Verfahrens im Hinblick auf erreichbare Geometrien und Gewichte bzw. Größen der Formteile führt.

Diese Aufgabe wird erfindungsgemäß gelöst durch eine Bindemittelmischung, umfassend mindestens eine polymere Verbindung A, ausgewählt aus einer Gruppe umfassend mindestens ein Polyethylen einschließlich HDPE, LDPE, MDPE und UHMW-HDPE, und/oder mindestens ein Polypropylen, in einer Menge in einem Bereich von etwa 10 Gew.-% bis etwa 60 Gew.-%, bevorzugt etwa 21 Gew.-% bis etwa 45 Gew.-%, bezogen auf die Gesamtmenge der Bindemittelmischung, mit einem ersten Erweichungsbereich, gemessen gemäß DIN ISO 4625, und mit einer ersten Schmelzviskosität, gemessen gemäß DIN 54811; mindestens eine polymere Verbindung B ausgewählt aus einer Gruppe umfassend mindestens ein Polyvinylacetat in einer Menge von etwa 10 Gew.-% bis etwa 65 Gew.-%, bevorzugt etwa 20 Gew.-% bis etwa 45 Gew.- %, bezogen auf die Gesamtmenge der Bindemittelmischung, mit einem zweiten Erweichungsbereich, gemessen gemäß DIN ISO 4625, und einer zweiten Schmelzviskosität, gemessen gemäß DIN 54811; mindestens eine nicht-polymere Verbindung C ausgewählt aus einer Gruppe umfassend mindestens ein natürliches, synthetisches und/oder chemisch modifiziertes Wachs, insbesondere Paraffinwachs einschließlich Hartparaffin, Mikrowachs, Montanwachs, Ceresin, Ozokerit und/oder Montanesterwachs, in einer Menge von etwa 10 Gew.-% bis etwa 65 Gew.-%, bevorzugt etwa 15 Gew.-% bis etwa 58 Gew.-%, bezogen auf die Gesamtmenge der Bindemittelmischung, wobei der erste Erweichungsbereich von Verbindung A und der zweite Erweichungsbereich von Verbindung B zwischen etwa 80 °C und etwa 200 °C, bevorzugt in einem Bereich zwischen etwa 100 °C bis etwa 180 °C, weiter bevorzugt in einem Bereich zwischen etwa 130 °C und 175 °C, liegt, wobei das Verhältnis der zweiten Schmelzviskosität von Verbindung B zu der ersten Schmelzviskosität von Verbindung A etwa 0,1:1 bis etwa 100:1, bevorzugt 0,15:1 bis 15:1, weiter bevorzugt 0,2:1 bis 1,95:1 beträgt, und die Verbindung B und die Verbindung C in einem Lösemittel, ausgewählt aus einer Gruppe umfassend Aceton, Xylol, Terpentin, Tetrahydrofuran und/oder Ethylacetat, bei einer Temperatur in einem Bereich von etwa 20 °C bis etwa 90 °C, bevorzugt etwa 30 °C bis etwa 85 °C, weiter bevorzugt etwa 35 °C bis etwa 70 °C, lösbar sind.

Soweit vorstehend als auch nachfolgend der Begriff "etwa" in Zusammenhang mit Bereichsangaben von physikalischen und/oder chemischen Parametern genannt ist, so ist in diesem Zusammenhang für den Fachmann vor dem Hintergrund seines Fachwissens im Bereich der Pulvermetallurgie als auch der Spritzverfahren ersichtlich, dass durch die angegebenen Bereichsgrenzen diese etwas über- oder unterschließenden Bereiche nicht ausgeschlossen sind, sondern auch zur Erfüllung der mit der vorliegenden Erfindung gelösten Aufgabe beitragen. So wird der angesprochene Fachmann ohne weiteres Abweichungen von +/- 10 % von den angegebenen Bereichsgrenzen noch mit der Lösung der Aufgabe der vorliegenden Erfindung und beim Nacharbeiten der erfindungsgemäßen Lehre berücksichtigen.

Der Begriff "lösbar" oder "Lösbarkeit" im Sinne der vorliegenden Erfindung wird dahingehend verstanden, dass in Bezug auf diejenigen Verbindungen, in deren Zusammenhang der Begriff "lösbar" in der vorliegenden Erfindung verwendet wird, d. h. insbesondere die Verbindungen B, C und D, dieser bezogen ist auf einen Temperaturbereich von etwa 20 °C bis etwa 90 °C, bevorzugt etwa 45 °C bis etwa 80 °C, bei einer Lösedauer in einem Bereich von etwa 8 Stunden bis etwa 36 Stunden, abhängig von der Wandstärke, wobei mittels Einsatz des erfindungsgemäßen Bindemittels hergestellte Grünlinge vollständig in das vorgesehene Lösemittel eingelegt werden. Bei den vorgenannten Bedingungen werden dabei bevorzugt mindestens etwa 90 Gew.-%, weiter bevorzugt mindestens etwa 95 Gew.-% der fraglichen Verbindungen, insbesondere der Verbindungen B, C und D, aus dem Grünling-Formteil gelöst.

Soweit in der vorliegenden Erfindung der Begriff "Schmelzviskosität" verwendet wird, handelt es sich um Werte, die von der chemischen Art des Polymers und der Temperatur abhängig sind. Üblicherweise werden zu den von der erfindungsgemäßen Bindemittelmischung umfassten Verbindungen Angaben bezüglich Melt Flow Rate (MFR) oder Melt Volume Rate (MVR) (Schmelzindex) zur Verfügung gestellt, die nach DIN EN ISO 1133 unter bestimmten Bedingungen ermittelt werden. Die Kenntnisse dieser Bedingungen erlauben, die MFR- und MVR-Werte in die dynamische Viskosität [Pa•s] der Schmelze (Schmelzviskosität) umzurechnen. Darüber hinaus beziehen sich die MFR- und MVR-Werte auf bestimmte Temperaturen (z. B. 190 °C oder 230 °C). Für die erfindungsgemäße Bindemittelmischung sind Viskositätswerte bei Spritzgießtemperatur von Interesse. Diese müssen explizit ermittelt werden. Die Viskositätswerte für die Schmelzviskosität von den einzelnen Polymeren der vorliegenden Erfindung, sind mit Hilfe eines Kapillar-Rheometers "RHEO-TESTER 1000" von der Firma Göttfert Werkstoff-Prüfmaschinen GmbH/Deutschland nach DIN 54811 gemessen worden.

Soweit im Sinne der vorliegenden Erfindung ein Verhältnis der ersten und zweiten Schmelzviskositäten der Verbindungen A und B angesprochen ist, beziehen sich die dortigen Angaben vorzugsweise auf eine Temperatur des Spritzprozesses, die für solche Bindemischungen in einem Bereich von etwa 160 °C bis etwa 180°C liegt.

Der Erweichungsbereich der Verbindungen A und B wird gemäß DIN ISO 4625 (mit Ring und Kugel) bestimmt.

Soweit in der vorliegenden Erfindung die Begriffe "Polymer" oder "polymere Verbindung" benutzt werden, ist hierunter in Übereinstimmung mit der IUPAC-Definition eine Substanz zu verstehen, die aus solchen Molekülen aufgebaut ist, in denen eine Art oder mehrere Arten von Atom- oder Atomgruppierungen wiederholt aneinandergereiht sind. Im Sinne der vorliegenden Erfindung sind unter den Begriffen "polymere Verbindung" oder "Polymere" insbesondere solche Verbindungen zu verstehen, welche als Homopolymere, Copolymere, Blockpolymere, Blockcopolymere, Propfpolymere und/oder isotoktische Polymere oder Mischungen dieser ausgebildet sind. Dementsprechend fallen im Sinne der vorliegenden Erfindung unter den Begriff "nicht-polymere Verbindung" solche Verbindungen, welche eben nicht der vorgenannten Definition unterfallen.

Klarstellend sei darauf hingewiesen, dass im Sinne der vorliegenden Erfindung der Begriff "Verbindung", wie er im Zusammenhang mit den Verbindungen A, B, C und D benutzt wird, sowohl eine einzige Substanz als auch eine Mischung aus Substanzen betreffen kann.

Der große Vorteil der erfindungsgemäßen Bindemittelmischung liegt darin, dass diese eine ausgezeichnete Fließfähigkeit bei noch guter Grünfestigkeit aufweist, so dass auch großdimensionierte Bauteile, insbesondere sehr länglich ausgebildete, und auch solche mit Hinterschneidungen hergestellt werden können. Bei entsprechender Auslegung der erfindungsgemäßen Bindemittelmischung ist diese darüber hinaus in einem Lösemittel zumindest teilweise lösbar, dass im Vergleich zu einem katalytischen Entbinderungsprozess (z. B. mit HNO₃) in Bezug auf die Bedienungs- und Umweltaspekte schonender ist. Insbesondere können vorteilhafterweise auch Grünlinge erhalten werden, welche so gut wie keine Gratausbildung aufweisen, was die weitergehende Verarbeitung, insbesondere Bearbeitung, der Grünlinge weiter erleichtert. Zudem weisen die mittels der erfindungsgemäßen Bindemittelmischung hergestellten Formteile nur eine geringe, bevorzugt fast keine, Neigung zur Bildung von Rissen, auch bei großen, insbesondere langbauenden Formteilen und damit eine ausreichende Formstabilität für das nachfolgende Sintern auf.

Die mindestens eine polymere Verbindung A ist vorzugsweise in einer Menge von etwa 21 Gew.-% bis etwa 45 Gew.-%, bevorzugt bis etwa 40 Gew.-%, weiter bevorzugt in einer Menge von etwa 30 Gew.-% bis etwa 38 Gew.-%, bezogen auf die Gesamtmenge der Bindemittelmischung, in der erfindungsgemäßen Bindemittelmischung enthalten. Die mindestens eine polymere Verbindung B ist bevorzugt in einer Menge von etwa 20 Gew.-% bis etwa 45 Gew.-%, weiter bevorzugt in einer Menge von etwa 24 Gew.-% bis 38 Gew.-%, bezogen auf die Gesamtmenge der Bindemittelmischung, in der erfindungsgemäßen Bindemittelmischung enthalten. Die mindestens eine nicht-polymere Verbindung C ist vorzugsweise in einer Menge von etwa 15 Gew.-% bis etwa 58 Gew.-%, weiter bevorzugt etwa 20 Gew.-% bis etwa 38 Gew.-%, noch weiter bevorzugt in einer Menge von etwa 25 Gew.-% bis etwa 35 Gew.-%, bezogen auf die Gesamtmenge der Bindemittelmischung, in der erfindungsgemäßen Bindemittelmischung enthalten.

Das Verhältnis der zweiten Schmelzviskosität von Verbindung B zu der ersten Schmelzviskosität von Verbindung A beträgt vorzugsweise etwa 0,25:1 bis etwa 1,9:1 und kann auch etwa 2:1 bis etwa 100:1, bevorzugt etwa 3:1 bis etwa 50:1 weiter bevorzugt etwa 5:1 bis etwa 40:1, betragen. Weiter bevorzugt ist Verbindung A nicht lösbar in einem Lösemittel der Gruppe umfassend Aceton, Xylol, Terpentin, Tetrahydrofuran und/oder Ethylacetat, in welcher die Verbindung B und Verbindung C in einem Temperaturbereich von etwa 20 °C bis etwa 90 °C zumindest überwiegend lösbar sind. Vorteilhafterweise unterscheiden sich die Schmelzviskositäten der Verbindung A und B um etwa 0% bis etwa 15 % voneinander.

Die Verbindung B ist ausgewählt aus einer Gruppe umfassend mindestens ein Polyvinylacetat, bevorzugt umfassend mindestens ein Polyvinylacetat-Homopolymer, weiter bevorzugt umfassend mindestens ein Polyvinylacetat mit einem Molekulargewicht M_{w}, ermittelt in Übereinstimmungen mit der Prüfmethode nach SEC, PS-Standard, in einem Bereich zwischen etwa 150.000 und etwa 500.000, weiter bevorzugt zwischen etwa 200.000 und etwa 400.000. Im Sinne der vorliegenden Erfindung ist es auch möglich, Copolymere des Vinylacetates einzusetzen, beispielsweise Ethylen-Vinylacetat-Copolymere oder solche mit Vinylchlorid wie beispielsweise VCEVA oder VCVAC. Besonders bevorzugt ist jedoch Polyvinylacetat bzw. Mischungen verschiedener Polyvinylacetate, da sich überraschenderweise gezeigt hat, dass diese aufgrund vergleichbarer Schmelzbereiche und einer höheren Viskosität, verglichen mit der Verbindung A, bei gleichzeitig ähnlicher Lösbarkeit wie die Verbindung C in idealer Weise sowohl eine ausreichende Fließfähigkeit als auch Festigkeit der unter Einsatz des erfindungsgemäßen Bindemittels hergestellter Mischungen bzw. Formteile zur Verfügung stellt.

Vorteilhafterweise liegt die Schmelzviskosität der Verbindung B, vorzugsweise ausgewählt aus einer Gruppe umfassend Polyvinylacetat, in einem Bereich von etwa 200 Pa·s bis etwa 100.000 Pa·s, weiter vorteilhaft in einem Bereich von etwa 1.500 Pa·s bis etwa 20.000 Pa·s, jeweils bei 160 °C, und der Erweichungsbereich zwischen etwa 140 °C bis etwa 195 °C.

Die Verbindung A ist ausgewählt aus einer Gruppe umfassend mindestens ein Polyethylen einschließlich HDPE, LDPE, MDPE und/oder UHMW-HDPE, und/oder mindestens ein Polypropylen, und bevorzugt ausgewählt aus einer Gruppe umfassend ein Polypropylen oder Mischungen von Polypropylenen, weiter bevorzugt umfassend mindestens ein Polypropylen-Homopolymer. Vorteilhafterweise liegt die erste Schmelzviskosität von A in einem Bereich von etwa 100 Pa·s bis etwa 10.000 Pa·s, weiter bevorzugt in einem Bereich von etwa 1.000 Pa·s bis etwa 5.000 Pa·s, jeweils bei 160 °C. Vorteilhafterweise liegt der erste Erweichungsbereich der Verbindung A zwischen etwa 150 °C bis etwa 180 °C.

Weiter vorteilhafterweise liegt die Dichte der Verbindung A in einem Bereich von etwa 0,85 g/cm² bis etwa 0,95 g/cm², besonders bevorzugt in einem Bereich zwischen etwa 0,88 g/cm² bis etwa 0,93 g/cm², bei 20 °C, bestimmt gemäß DIN EN ISO 1183. Vorteilhafterweise liegt die Dichte der Verbindung B, gemäß DIN EN ISO 1183, bei 20 °C in einem Bereich von etwa 1,1 g/cm² bis etwa 1,25 g/cm², weiter bevorzugt in einem Bereich von etwa 1,15 g/cm² bis etwa 1,2 g/cm².

Das mittlere Molekulargewicht M_{W} gemäß SEC, PS-Standard, liegt für Verbindung A vorteilhafterweise in einem Bereich von etwa 200.000 bis etwa 1.000.000, bevorzugt in einem Bereich von 250.000 bis etwa 800.000.

Die nicht-polymere Verbindung C ist ausgewählt aus einer Gruppe umfassend natürliche, synthetische und/oder chemisch modifizierte Wachse, insbesondere Paraffinwachse einschließlich Hartparaffin, sowie Mikrowachs, Montanwachs, Ceresin, und Ozokerit und/oder Montanesterwachse. Bevorzugt ist dabei die Verbindung C ausgewählt aus einer Gruppe umfassend ein Hartparaffin oder Mischungen von Hartparaffinen. Verbindung C weist vorzugsweise einen Erstarrungspunkt zwischen etwa 40 °C und 90 °C, weiter bevorzugt zwischen etwa 50 °C und etwa 65 °C, gemessen gemäß DIN ISO 2207 auf. Die Schmelzviskosität der Verbindung C liegt vorzugsweise in einem Bereich von etwa 0,5 bis etwa 10 mPa·s bei 100 °C.

Vorteilhafterweise liegt die Dichte der Verbindungen A, B und/oder C in einem Bereich von etwa 0,8 g/cm² bis etwa 1,5 g/cm² bei 20°C, bevorzugt etwa 0,85 g/cm³ bis etwa 1,3 g/cm³ bis 20 °C, gemessen gemäß DIN EN ISO 1183.

Weiter vorteilhafterweise umfasst die erfindungsgemäße Bindemittelmischung mindestens eine Verbindung D, ausgewählt aus einer Gruppe umfassend mindestens eine Fettsäure und/oder Fettsäureester. Weiter bevorzugt ist die Verbindung D ausgewählt aus einer Gruppe umfassend mindestens eine Fettsäure, noch weiter bevorzugt aus einer Gruppe umfassend Stearinsäure und/oder Ölsäure. Weiter bevorzugt umfasst das erfindungsgemäße Bindemittel die Verbindung D in einer Menge bis etwa 8 Gew.-%, bezogen auf die Gesamtmenge der Bindemittelmischung, weiter bevorzugt in einer Menge von 0,5 Gew.-% bis etwa 6 Gew.-%, noch weiter bevorzugt in einer Menge von etwa 0,8 Gew.-% bis etwa 2,8 Gew.-%, jeweils bezogen auf die Gesamtmenge der Bindemittelmischung. Der Schmelzpunkt der Verbindung D liegt vorteilhafterweise in einem Bereich von etwa 50 °C bis etwa 75 °C, weiter bevorzugt in einem Bereich von etwa 58 °C bis etwa 69 °C.

In einer besonders bevorzugten Ausführungsform besteht die erfindungsgemäße Bindemittelmischung aus den Verbindungen A, B, C und gegebenenfalls D, wobei die Verbindung A ein Polypropylen, die Verbindung B ein Polyvinylacetat, die Verbindung C ein Hartparaffin und die gegebenenfalls, aber bevorzugt vorhandene Verbindung D Stearinsäure ist. Besonders bevorzugt ist eine Bindemittelmischung, welche etwa 30 Gew.-% bis etwa 38 Gew.-% mindestens eines Polyvinylacetats, etwa 25 Gew.-% bis 38 Gew.-% mindestens eines Hartparaffins, etwa 30 Gew.-% bis etwa 40 Gew.-% mindestens eines Polypropylens und gegebenenfalls etwa 0,3 Gew.-%, bevorzugt etwa 0,5 Gew.-%, bis etwa 2,6 Gew.-%, Stearinsäure aufweist, jeweils bezogen auf die Gesamtmenge der Bindemittelmischung. Vorteilhafterweise sind neben den vorstehend genannten Verbindungen A, B, C und gegebenenfalls D keine weiteren Bestandteile in der Bindemittelmischung enthalten. Es kann erfindungsgemäß vorgesehen sein, dass Verbindung D von der vorstehend genannten bevorzugten Bindemittelmischung nicht umfasst ist.

Des Weiteren betrifft die vorliegende Erfindung eine spritzfähige Mischung (Feedstock), umfassend eine erfindungsgemäße Bindemittelmischung, weiter bevorzugt umfassend weiterhin mindestens ein pulverförmiges Material. Das pulverförmige Material ist bevorzugt ausgewählt aus einer Gruppe umfassend mindestens ein metallisches und/oder keramisches Material. Weiter bevorzugt umfasst die spritzfähige Mischung, insbesondere eine im PIM-Verfahren einsetzbare, die erfindungsgemäße Bindemittelmischung in einer Menge in einem Bereich von etwa 30 Vol.-% bis etwa 60 Vol.-%, bezogen auf das gesamte Volumen der spritzfähigen Mischung, und ein pulverförmiges Material, ausgewählt aus einer Gruppe umfassend metallische und/oder keramische Materialien, (z.B. 17-4PH, 316L, Fe8Ni, Al₂O₃, ALN und/oder Si₃N₄) in einer Menge von etwa 40 Vol.-% bis etwa 70 Vol.-%, bezogen auf das gesamte Volumen der spritzfähigen Mischung. Die erfindungsgemäße spritzfähige Mischung umfasst die erfindungsgemäße Bindemittelmischung vorzugsweise in einer Menge in einem Bereich von bis zu etwa 10 Gew.-%, bevorzugt in einer Menge von etwa 5 Gew.-% bis etwa 9 Gew.-%, jeweils bezogen auf die Gesamtmenge der spritzfähigen Mischung.

Weiterhin betrifft die vorliegende Erfindung ein Verfahren zur Herstellung von Formteilen mittels Spritzverfahren, vorteilhafterweise mittels Pulverspritzgießen (PIM), wobei eine spritzfähige Mischung, wie vorstehend beschrieben, als Feedstock einer Spritzvorrichtung zugeführt und ein Formteil hergestellt, dieses mit einem Lösemittel zur Entbinderung der löslichen Bestandteile der Bindemittelmischung, vorzugsweise bei einer Temperatur in einem Bereich von etwa 45 °C bis etwa 80 °C, und vorzugsweise über eine Dauer von etwa 8 h bis etwa 36 h, behandelt, eine Wärmebehandlung, insbesondere über eine Dauer von etwa 1 h bis etwa 10 h, zur weitergehenden Entbinderung, insbesondere in einem Temperaturbereich von etwa 300 °C bis etwa 650°C, durchgeführt und das Formteil insbesondere bei einer Temperatur in einem Bereich von etwa 1000 °C bis etwa 1400°C, vorzugsweise etwa 1200°C bis etwa 1380°C, gesintert wird.

In der vorliegenden Erfindung ist unter dem Begriff "Lösemittel" ein einzelnes oder eine Mischung solcher Mittel zu verstehen. Das Lösemittel ist dabei vorzugsweise ausgewählt aus einer Gruppe umfassend Aceton, Xylol, Terpentin, Tetrahydrofuran und/oder Ethylacetat.

Vorteilhafterweise wird bei der Entbinderung mittels des Lösemittels die Verbindung B und C sowie gegebenenfalls auch D fast vollständig aus dem Grünling entfernt. Insbesondere eine Restmenge der Verbindung B, vorzugsweise in einer Menge von nicht mehr als etwa 1 Gew.-%, bezogen auf eine Gesamtmenge der spritzfähigen Mischung, d. h. eine Mischung aus mindestens einer Bindemittelmischung und mindestens einem pulverförmigen Material, im Formteil vor der Wärmebehandlung vorhanden, kann, ebenso wie die Verbindung A, in der Wärmebehandlung, welche in eine Vorsinterung übergehen kann, entfernt werden. Verbindung D ist vorzugsweise durch Entbinderung mittels Lösemittel entfernbar.

Diese und weitere Vorteile werden anhand der nachfolgenden Beispiele nähergehend erläutert. Dabei ist zunächst darauf hinzuweisen, dass die in den nachfolgenden Beispielen angeführten Merkmale den Gegenstand der vorliegenden Erfindung nicht beschränken. Vielmehr sind die jeweils in der allgemeinen Beschreibung einschließlich der Beispiele angegebenen Merkmale zur Weiterbildung miteinander kombinierbar. Insbesondere ist dort eine Beschränkung auf die spezifisch ausgewählten Verbindungen A, B, C und D als auch eine Beschränkung auf die spezifischen Parameter des PIM-Verfahrens weder vorgesehen noch gewollt, vielmehr können auch andere Materialien bzw. Zusammensetzungen, bzw. Spritzverfahren zum Einsatz kommen.

Es wurden insgesamt 4 Beispielsmischungen eines erfindungsgemäßen Bindemittels mit unterschiedlichen Bestandteilen der Verbindungen A, B und C und gegebenenfalls D hergestellt.

Als Verbindung A wurde ein Polypropylen-Homopolymer der Basell Polyolefins GmbH, Köln mit einem Erweichungsbereich von etwa 150 °C bis etwa 170 °C, bestimmt gemäß DIN ISO 4625 (mit Ring und Kugel), einer Dichte bei 20 °C in einem Bereich von etwa 0,89 g/cm² bis etwa 0,91 g/cm² gemäß DIN EN ISO 1183 und einer Schmelzviskosität von etwa 2.000 Pa·s bei 160 °C und etwa 2.500 Pa s bei 180 °C, gemessen gemäß DIN 54811, eingesetzt.

Als Verbindung B wurde ein Polyvinylacetat-Homopolymer der Wacker Chemie AG eingesetzt mit einer Schmelzviskosität bei 160 °C von etwa 2.000 Pa·s, einem mittlerem Molekulargewicht M_{W} in einem Bereich von etwa 270.000 bis etwa 310.000 und einer Dichte von etwa 1,18 g/cm² gemäß DIN EN ISO 1183 sowie einem Erweichungsbereich, gemessen gemäß DIN ISO 4625 (mit Ring und Kugel) von etwa 150 °C bis etwa 160 °C.

Als Verbindung C wurde eingesetzt ein Hartparaffin der H&R Wachs Company, Hamburg, mit einer Schmelzviskosität von etwa 4 mPa·s bei 100 °C gemäß DIN 54811, einem Erstarrungspunkt gemäß DIN ISO 2207 von etwa 61 °C und einer Dichte gemäß DIN 51757 von etwa 0,775 g/cm² bei 80 °C.

Als Verbindung D wurde Stearinsäure eingesetzt, bezogen von Fisher Scientific GmbH, Schwerte mit einer Dichte gemäß DIN EN ISO 1183 von etwa 0,94 g/cm² bei 20 °C und einem Schmelzpunkt von etwa 67 °C bis etwa 69 °C.

Die vorstehend genannten Verbindungen A, B und C sowie gegebenenfalls D wurden zunächst miteinander zu Mischungen 1 bis 4 vermischt und nachfolgend vor Zuführung zu einer Spritzvorrichtung mit einem metallischem Pulver bei 180 °C vermischt bis zur Erzielung einer homogenen Mischung. Als metallisches Pulver wurde dabei ein solches mit der Bezeichnung Carb.Fe (Carbonyl-Eisen) der Sintez Engineering Ltd., Dzerzhinsk, Russland, ein Pulver 316L und 17-4PH der Carpenter Powder Products GmbH, Düsseldorf, eingesetzt. Auch wurde eine Mischung des Masteralloypulvers 17-4PH MA mit Carbonyl-Eisen in Verhältnis 2:1 eingesetzt, um anschließend eine Zusammensetzung von 17-4PH im Material zu erreichen.

Das Pulverspritzgießen der solchermaßen hergestellten Feedstocks (spritzfähigen Mischungen) wurde mit einer Spritzvorrichtung der Firma Arburg GmbH & Co. KG, Loßburg durchgeführt, und so Grünlinge in Form von Spiralen mit den Maßen 740 : 5 : 3 (Länge : Breite : Höhe in mm) bzw. Bauteile mit den Maßen (197 mm lang, 30 mm breit und 34 mm hoch sowie mit Wandstärken bis zu 10 mm) bei einem Gewicht von 400 g erzeugt. Die Zylinder- und Werkzeugtemperaturen, die Einspritzdrücke, die Einspritzgeschwindigkeiten, die Nachdrücke und die Kühlzeiten sind der nachfolgenden Tabelle zu entnehmen.

Nachfolgend der Herstellung der Grünlinge mittels dem Pulverspritzgießen wurden die erhaltenen Grünlinge in Ethylacetat in einem Temperaturbereich zwischen 45 °C und 80 °C entbindert, wobei die Verbindungen B, C und D so gut wie vollständig aus dem Grünling entfernt wurden, bis auf eine sehr geringe Restmenge von Verbindung B. Die Entbinderung mittels Lösemittel erfolgt dabei über 8 bis 36 Stunden in einer Entbinderungsanlage der LÖMI GmbH, Aschaffenburg, bevorzugt 12 bis 24 Stunden. Nachfolgend wurden die solchermaßen vorentbinderten Formteile einer Wärmebehandlung bei einer Temperatur von etwa 600 °C über einen Zeitraum von 1 bis 10 Stunden, bevorzugt 1 bis 4 Stunden zugeführt, wobei Verbindung A und die geringe Restmenge der Verbindung B vollständig aus dem Formteil entbindert wurden, an welche sich eine Sinterung bei Temperaturen in einem Bereich von etwa 1.200 °C bis 1.380 °C über einen Zeitraum von 1 bis etwa 4 Stunden anschloss.

Aus der nachfolgenden Tabelle sind die Zusammensetzungen der insgesamt 4 Mischungen als auch die jeweiligen Spritzparameter sowie die Eigenschaften der erhaltenen Grünlinge bzw. Formteile nach Sinterung zu entnehmen.

**Tabelle**

| Mischung | 1 | 2 | 3 | 4 |
|---|---|---|---|---|
| Metallpulver | Carb.Fe | 316L | 17-4PH | 17-4PH MA + Carb. Fe |
| Gew.-% Binder | 7,3 % | 7,0% | 6,9% | 7,0% |
| Gew.-% Pulver | 92.7% | 93,0% | 93,1 % | 93,0% |
| Vol.-% Pulver | 82,0% | 62,0% | 62,0% | 62,5% |

| Bindemittel | | | | |
|---|---|---|---|---|
| A [Gew.-%] | 42,5 | 28,0 | 22,0 | 38,0 |
| B [Gew.-%] | 38,5 | 28,0 | 22,0 | 26,0 |
| C [Gew.-%] | 16,5 | 44,0 | 56,0 | 35,0 |
| D [Gew.-%] | 2,5 | 0 | 0 | 1,0 |

| Spritzgussparameter | | | | |
|---|---|---|---|---|
| Zylindertemperatur / C° | 170 - 195 | 175 -195 | 175 -195 | 175 -190 |
| Werkzeugtemperatur / C° | 60 | 58 | 55 | 50 |
| Einspritzdruck / bar | 2000 | 1350 | 1350 | 1350 |
| Einspritzgeschwindigkeit / ccm/s | 40 | 65 | 60 | 65 |
| Nachdruck / bar | 1500 | 800 | 1000 | 600 |
| Kühlzeit / s | 25 | 35 | 60 | 30 |

| Eigenschaften | | | | |
|---|---|---|---|---|
| Fließfähigkeit | ausreichend | befriedigend | sehr gut | sehr gut |
| Grünfestigkeit | sehr gut | befriedigend | ausreichend | gut |
| Entformbarkeit | gut | befriedigend | gut | gut |
| Oberflächengüte | gut | befriedigend | befriedigend | ausreichend |

Die Variierung der Verbindungen A bis D erlaubt, unterschiedliche Feedstocks zu konzipieren, deren Eigenschaften zu bestimmten Anwendungen am Besten geeignet sind. Zum Beispiel wurden sehr gute Fließeigenschaften bei den Mischungen 3 und 4 erreicht. Eine sehr gute Grünfestigkeit und Formstabilität des ungesinterten Formteils wurden mit der Mischung 1 erzielt. Einen Kompromiss der wichtigen Eigenschaften stellt die Mischung 2 dar.

Mit der vorliegenden Erfindung wird somit eine Bindemittelmischung und ein Feedstock zur Verfügung gestellt, welche insbesondere im PIM-Verfahren eingesetzt werden können zur Herstellung von Bauteilen größerer Bauformen, insbesondere mit einem großen Wandstärken-Länge-Verhältnis.

## Patentansprüche

1. Bindemittelmischung für die Herstellung von Formteilen mittels Spritzverfahren, umfassend mindestens eine polymere Verbindung A, ausgewählt aus einer Gruppe umfassend mindestens ein Polyethylen einschließlich HDPE, LDPE, MDPE und UHMW-HDPE, und/oder mindestens ein Polypropylen, in einer Menge in einem Bereich von etwa 10 Gew.-% bis etwa 60 Gew.-%, bezogen auf die Gesamtmenge der Bindemittelmischung, mit einem ersten Erweichungsbereich, gemessen gemäß DIN ISO 4625, und einer ersten Schmelzviskosität, gemessen gemäß DIN 54811; mindestens eine polymere Verbindung B ausgewählt aus einer Gruppe umfassend mindestens ein Polyvinylacetat in einer Menge von etwa 10 Gew.-% bis etwa 65 Gew.-%, bezogen auf die Gesamtmenge der Bindemittelmischung, mit einem zweiten Erweichungsbereich, gemessen gemäß DIN ISO 4625, und einer zweiten Schmeizviskosität, gemessen gemäß DIN 54811; mindestens eine nicht-polymere Verbindung C ausgewählt aus einer Gruppe umfassend mindestens ein natürliches, synthetisches und/oder chemisch modifiziertes Wachs, insbesondere Paraffinwachs einschließlich Hartparaffin, Mikrowachs, Montanwachs, Ceresin, Ozokerit und/oder Montanesterwachs, in einer Menge von etwa 10 Gew.-% bis etwa 65 Gew.-%, bezogen auf die Gesamtmenge der Bindemittelmischung, wobei der erste Erweichungsbereich von Verbindung A und der zweite Erweichungsbereich von Verbindung B zwischen etwa 80 °C und etwa 200 °C liegt, das Verhältnis der zweiten Schmelzviskosität von Verbindung B zu der ersten Schmelzviskosität von Verbindung A etwa 0,1:1 bis etwa 100:1 beträgt, und die Verbindung B und die Verbindung C in einem Lösemittel, ausgewählt aus einer Gruppe umfassend Aceton, Xylol, Terpentin, Tetrahydrofuran und/oder Ethylacetat, in einem Temperaturbereich zwischen etwa 20 °C und etwa 90 °C lösbar ist.

2. Bindemittelmischung gemäß Anspruch 1, **dadurch gekennzeichnet, dass** die zweite Schmelzviskosität der Verbindung B in einem Bereich von etwa 200 Pa·s bis etwa 100.000 Pa·s bei 160 °C liegt.

3. Bindemittelmischung gemäß einem der vorhergehenden Ansprüche, **dadurch gekennzeichnet, dass** die erste Schmelzviskosität der Verbindung A in einem Bereich von etwa 100 Pa·s bis etwa 10.000 Pa·s bei 160 °C liegt.

4. Bindemittelmischung gemäß einem der vorhergehenden Ansprüche, **dadurch gekennzeichnet, dass** ein Erstarrungspunkt der Verbindung C zwischen etwa 40 °C und etwa 90 °C liegt.

5. Bindemittelmischung gemäß einem der vorhergehenden Ansprüche, **dadurch gekennzeichnet, dass** eine Dichte der Verbindungen A, B und/oder C in einem Bereich von etwa 0,8 g/cm³ bis etwa 1,5 g/cm³ bei 20 °C liegt.

6. Bindemittelmischung gemäß einem der vorhergehenden Ansprüche, **dadurch gekennzeichnet, dass** diese weiterhin mindestens eine Verbindung D umfasst, ausgewählt aus einer Gruppe umfassend mindestens eine Fettsäure und/oder Fettsäureester.

7. Bindemittelmischung gemäß Anspruch 6, **dadurch gekennzeichnet, dass** diese die Verbindung D in einer Menge von etwa 0,05 Gew.-% bis etwa 8 Gew.-%, bezogen auf die Gesamtmenge der Bindemittelmischung, umfasst.

8. Bindemittelmischung gemäß einem der vorhergehenden Ansprüche, wobei die Verbindung A ein Polypropylen, Verbindung B ein Polyvinylacetat, Verbindung C ein Hartparaffin sind und die gegebenenfalls vorhandene Verbindung D Stearinsäure ist.

9. Spritzfähige Mischung, umfassend mindestens eine Bindemittelmischung gemäß einem der Ansprüche 1 bis 8.

10. Spritzfähige Mischung gemäß Anspruch 9, **dadurch gekennzeichnet, dass** diese die Bindemittelmischung in einer Menge in einem Bereich von etwa 30 Vol.-% bis etwa 60 Vol.-%, bezogen auf die spritzfähige Mischung, und mindestens ein pulverförmiges Material, ausgewählt aus einer Gruppe umfassend metallische und/oder keramische Materialien, in einer Menge von etwa 40 Vol.-% bis etwa 70 Vol.-%, bezogen auf die spritzfähige Mischung, umfasst.

11. Verfahren zur Herstellung von Formteilen mittels Spritzgießen, wobei eine spritzfähige Mischung gemäß einem der Ansprüche 9 oder 10 als Feedstock einer Spritzvorrichtung zugeführt und ein Formteil hergestellt, dieses mit einem Lösemittel zur Entbinderung der löslichen Bestandteile der Bindemittelmischung behandelt, eine Wärmebehandlung zur weitergehenden Entbinderung durchgeführt und das Formteil gesintert wird.

## Claims

1. A binder mixture for producing molded parts by injection molding methods, comprising at least one polymeric compound A selected from the group comprising at least one polyethylene including HDPE, LDPE, MDPE and UHMW-HDPE, and/or at least one polypropylene in an amount within a range of about 10% by weight to about 60% by weight, based on the total amount of the binder mixture, with a first softening range measured according to DIN ISO 4625 and a first melt viscosity measured according to DIN 54811; at least one polymeric compound B selected from the group comprising at least one poly(vinyl acetate) in an amount of about 10% by weight to about 65% by weight, based on the total amount of the binder mixture, with a second softening range measured according to DIN ISO 4625 and a second melt viscosity measured according to DIN 54811; at least one non-polymeric compound C selected from the group comprising at least one natural, synthetic and/or chemically modified wax, especially paraffin wax including hard paraffin, microwax, montan wax, ceresin, ozokerite and/or montan ester wax, in an amount of about 10% by weight to about 65% by weight, based on the total amount of the binder mixture, wherein said first softening range of compound A and said second softening range of compound B are between about 80 °C and about 200 °C, the ratio of the second melt viscosity of compound B to the first melt viscosity of compound A is from about 0.1:1 to about 100:1, and compound B and compound C are soluble in a solvent selected from the group comprising acetone, xylene, turpentine, tetrahydrofuran and/or ethyl acetate in a temperature range of from about 20 °C to about 90 °C.

2. The binder mixture according to claim 1, **characterized in that** the second melt viscosity of compound B is within a range from about 200 Pa·s to about 100,000 Pa·s at 160 °C.

3. The binder mixture according to any of the preceding claims, **characterized in that** the first melt viscosity of compound A is within a range from about 100 Pa·s to about 10,000 Pa·s at 160 °C.

4. The binder mixture according to any of the preceding claims, **characterized in that** a solidification point of compound C is from about 40 °C to about 90 °C.

5. The binder mixture according to any of the preceding claims, **characterized in that** a density of compounds A, B and/or C is within a range from about 0.8 g/cm³ to about 1.5 g/cm³ at 20 °C.

6. The binder mixture according to any of the preceding claims, **characterized by** further comprising at least one compound D selected from the group comprising at least one fatty acid and/or fatty acid ester.

7. The binder mixture according to claim 6, **characterized by** comprising compound D in an amount of about 0.05% by weight to about 8% by weight, based on the total amount of the binder mixture.

8. The binder mixture according to any of the preceding claims, wherein compound A is a polypropylene, compound B is a poly(vinyl acetate), compound C is a hard paraffin, and the optional compound D is stearic acid.

9. An injectable mixture, comprising at least one binder mixture according to any of claims 1 to 8.

10. The injectable mixture according to claim 9, **characterized by** comprising said binder mixture in an amount within a range of about 30% by volume to about 60% by volume, based on the injectable mixture, and at least one powdery material selected from the group comprising metallic and/or ceramic materials in an amount of about 40% by volume to about 70% by volume, based on the injectable mixture.

11. A process for producing molded parts by injection molding, wherein an injectable mixture according to either of claims 9 or 10 as a feedstock is supplied to an injection device to prepare a molded part, the latter is treated with a solvent for removing the binder from the soluble components of the binder mixture, a heat treatment for a more substantial removal of binder is performed, and the molded part is sintered.

## Revendications

1. Mélange de liants pour la production de pièces moulées par des procédés de moulage par injection, comprenant au moins un composé polymère A choisi dans le groupe comprenant au moins un polyéthylène incluant HDPE, LDPE, MDPE et UHMW-HDPE, et/ou au moins un polypropylène en une quantité comprise entre environ 10 % en poids à environ 60 % en poids, par rapport à la quantité totale du mélange de liants, avec une première plage de ramollissement, mesuré selon DIN ISO 4625, et une première viscosité à l'état fondu, mesuré selon DIN 54811 ; au moins un composé polymère B choisi dans le groupe comprenant au moins un poly(acétate de vinyle) en une quantité comprise entre environ 10 % en poids à environ 65 % en poids, par rapport à la quantité totale du mélange de liants, avec une seconde plage de ramollissement, mesuré selon DIN ISO 4625, et une seconde viscosité à l'état fondu, mesuré selon DIN 54811 ; au moins un composé non polymère C choisi dans le groupe comprenant au moins une cire naturelle, synthétique et/ou chimiquement modifiée, notamment cire de paraffine incluant paraffine solide, microcire, cire de lignite, cérésine, ozocérite et/ou cire ester de lignite, en une quantité comprise entre environ 10 % en poids à environ 65 % en poids, par rapport à la quantité totale du mélange de liants, dans lequel la première plage de ramollissement du composé A et la seconde plage de ramollissement du composé B sont comprises entre environ 80 °C et environ 200 °C, le rapport de la seconde viscosité à l'état fondu du composé B à la première viscosité à l'état fondu du composé A est d'environ 0,1 : 1 à environ 100 : 1, et le composé B et le composé C sont solubles dans un solvant choisi dans le groupe comprenant l'acétone, le xylène, la térébenthine, le tétrahydrofurane et/ou l'acétate d'éthyle dans une plage de températures comprises entre environ 20 °C et environ 90 °C.

2. Mélange de liants selon la revendication 1, **caractérisé en ce que** la seconde viscosité à l'état fondu du composé B est comprise entre environ 200 Pa·s et environ 100 000 Pa·s à 160 °C.

3. Mélange de liants selon l'une des revendications précédentes, **caractérisé en ce que** la première viscosité à l'état fondu du composé A est comprise entre environ 100 Pa·s et environ 10 000 Pa·s à 160 °C.

4. Mélange de liants selon l'une quelconque des revendications précédentes, **caractérisé en ce qu'**un point de solidification du composé C est compris entre environ 40 °C et environ 90 °C.

5. Mélange de liants selon l'une quelconque des revendications précédentes, **caractérisé en ce qu'**une densité des composés A, B et/ou C est comprise entre environ 0,8 g/cm³ et environ 1,5 g/cm³ à 20 °C.

6. Mélange de liants selon l'une quelconque des revendications précédentes, **caractérisé en ce qu'**il comprend en outre au moins un composé D choisi dans le groupe comprenant au moins un acide gras et/ou ester d'acide gras.

7. Mélange de liants selon la revendication 6, **caractérisé en ce qu'**il comprend le composé D en une quantité d'environ 0,05 % en poids à environ 8 % en poids, par rapport à la quantité totale du mélange de liants.

8. Mélange de liants selon l'une quelconque des revendications précédentes, dans lequel le composé A est un polypropylène, composé B est un poly(acétate de vinyle), composé C est une paraffine solide, et le composé D optionnel est l'acide stéarique.

9. Mélange moulable par injection comprenant au moins un mélange de liants selon l'une quelconque des revendications 1 à 8.

10. Mélange moulable par injection selon la revendication 9, **caractérisé en ce qu'**il comprend ledit mélange de liants en une quantité comprise entre environ 30 % en volume et environ 60 % en volume, par rapport au mélange moulable par injection, et au moins un matériau poudreux choisi dans le groupe comprenant des matériaux métalliques et/ou céramiques en une quantité comprise entre environ 40 % en volume et environ 70 % en volume, par rapport au mélange moulable par injection.

11. Procédé pour. préparer des pièces moulées par moulage par injection, dans lequel un mélange moulable par injection selon l'une des revendications 9 ou 10 est alimenté comme matière première à un dispositif de moulage par injection, une pièce moulée est préparée, traitée avec un solvant pour éliminer les liants des composants solubles du mélange de liants, un traitement thermique pour l'élimination plus substantielle des liants est effectuée, et la pièce moulée est frittée.
